# EUROPEAN PATENT APPLICATION

(11) **EP 4 446 262 A1**
(43) Date of publication of application: **16.10.2024**
(21) Application number: 23203359.7
(22) Date of filing: 12.10.2023
(51) Int. Cl.: B65G 43/02

(54) **A DEVICE FOR DETECTION OF CONVEYOR BELT DAMAGE**

(30) Priority: 11.04.2023 SI 202300050
(71) Applicant: Rek, Pavel, 2383 Smartno pri Slovenj Gradcu (SI)
(72) Inventor: Rek, Pavel, 2383 Smartno pri Slovenj Gradcu (SI)
(74) Representative: Patentni Biro AF d.o.o.

(57) **Abstract**

The present invention belongs to the field of transportation, more precisely to the field of control systems of sensors installed in conveyor belts and to the field of control devices, for example for ensuring safety, warning or troubleshooting of infinite conveyor belts. The sensor device for installation in a system of infinite conveyor belt together with the control electronics comprises an external induction coil and an inner induction coil, which are installed in grooves in the bottom part of the belt, a transmitter and a receiver of the control unit.

## Description

### Field of the invention

The present invention belongs to the field of transportation, more precisely to the field of control systems of sensors installed in conveyor belts and to the field of control devices, for example for ensuring safety, warning, or troubleshooting of infinite conveyor belts. The invention relates to a device for detection of conveyor belt damage.

### Background of the invention and the technical problem

Long conveyors having a length from 100 m to 25000 m, wherein the conveyor belt Is made of rubber, are subject to fine materials among which sharp and heavy foreign objects can occur. Said foreign objects can pierce the conveyor belt, get trapped in the belt construction or cut the belt along the whole length if the conveyor belt is not stopped. These long conveyors are used with several feeders, which cannot be controlled with workers. Further, visual control is not efficient, as the velocity of belts is above 2 m/s, and an entire belt or several tens of metres of belt can be damaged in few seconds.

The technical problem is a constructional design of a device for an infinite conveyor belt for fine materials, which will reliably detect a damage or a structural change of the conveyor belt and will generate a message to an operator regarding the detected damage of the conveyor belt. It is desirable that the device detects and signals the belt damage as quickly as possible to limit the damage as much as possible.

The aim of the invention is to increase the reliability of belt damage detection and generate a message to the operator in due course, so that drive of the belt can be immediately stopped.

### Prior art

Several different manufacturers experiment with various types of sensors, such as induction loops, coded antennas and similar. These solutions are relatively weak, as said sensors have a short life span, which is from two to three months. After this period the various folds and loads of the rubber belt the sensors cease to operate and do not prevent or limit a possible mechanical damage of the conveyor belt.

Replacing said sensors is a long process and represents that the 24/7 production faces several standstills. Thus, many use the belts without sensors. The problem of non-efficient installation of said sensors into the rubber belt using vulcanization, as acids, gases, liquids and dust is common in the environment, which corrode and mechanically tear the sensors, thus leading to their inefficient protection of the belt.

Patent GB1151335A describes a system for monitoring the condition and operation of a driving or conveyer belt comprising inclusions of magnetic material in the belt, cooperating with stationary flux-responsive means to detect rupture of the belt, lateral misalignment or variations in speed due to belt slip.

Registered utility model CZ 14761 discloses a solution for a sensory system for detection of longitudinal and transverse defects on conveyor belts. The system has built-in coils detecting a change in the current, which occurs upon damage of the conveyor belt.

Patent US7494004 discloses a method and a device for monitoring conveyor belts, comprising a sensor installed in the conveyor belt. The sensor may be a deformation sensor operating on the principle of piezoelectric effect, a magneto-elastic sensor or a surface acoustic wave (SAW) microsensor. Said sensor allows monitoring of parameters, such as belt wear and tension, number of cycles performed by the belt, serration, temperature, wear and extensions. The sensor creates a radiofrequency or a visual indicator of the measured parameter. A standard belt with installed sensor enables wireless connection or visual indicators for signalling the need for maintenance or replacement. The sensor is arranged to measure the properties of the material operation cycles, etc, using a self-powered energy source. When the sensor detects a change in the belt property, a warning for the operator is triggered.

Patent US4621727 discloses a sensor for sensing damage in a conveyor belt and a process for installation of conductive sensor windings into the conveyor belt. The disclosure relates to the shape of the coiled conductors forming the sensor windings. The sensor windings together with suitable electronic equipment enable detection of damage and ruptures of the conveyor belt during its operation.

### Description of the solution to the technical problem

All known solutions solve the problem of sensing ruptures of the transport belt in a different manner as the present invention, as none of the known disclosures does not suggest installation of two induction coils into the structure of the conveyor belt. The technical problem is solved as defined in the independent claim, while the preferred embodiments are described in dependent claims.

The essence of the sensor device for sensing damage of the conveyor belt according to the invention is in that an external and an inner induction coil are installed in a bottom part of the conveyor belt. A groove for installation of the induction coils is provided in the bottom part of the conveyor belt directly below the carrier steel braided rope.

The device for sensing damage of the conveyor belt according to the invention, which is configured for installation in a system of an infinite conveyor belt together with control electronics, preferably comprises:
- at least one external induction loop and at least one inner induction loop, both forming a pair of induction loops, wherein said loops are installed in grooves provided in a bottom part of the conveyor belt below the carrier steel braids, wherein the outer diameter of both induction loops is equal or smaller than 4 mm, and wherein the device comprises at least one pair of induction loops,
- a transmitter comprising a coil for generating electromagnetic field of sending an electromagnetic signal to the induction loop, thus forming an electromagnetic field of the loop,
- a receiver arranged for sensing the electromagnetic field of the loop, and
- a control unit for controlling operation of the device and/or the conveyor belt and a monitoring unit, which is arranged to notify a user that replacement is needed or that the conveyor belt is damaged in case lower power of the signal received by the receiver is sensed, wherein the control unit is also arranged to terminate the drive of the conveyor belt.

The induction loops installed in the belt does not reduce its rigidity and carrying capacity.

The transmitter and receiver are placed opposite each other on both sides under the upper rollers of the conveyor belt. The coil in the transmitter generates an electromagnetic field at a relatively low frequency and sends an electromagnetic signal to the induction loop, where a current is induced that creates the loop's electromagnetic field. The electromagnetic field of the loop is sensed by the receiving coil of the receiver every time the induction loop passes by. The receiver transmits the received signal to the control unit every time, and as long as the signal strength is adequate, the system continues to function smoothly. If one loop breaks due to wear of the material in the loop, the detected signal on the receiver is smaller and informs the operator that it is necessary to replace the loop. If both loops are broken, the receiver detects an even smaller signal, which is a sign of tape damage. A lower receiver signal received by the control unit triggers the generation of a signal for the control unit to stop the conveyor belt drive.

The device may be installed in any infinite conveyor belt or it can be built in the belt during the manufacturing process of the said belt.

The process of manufacturing the conveyor belt is carried out in the following manner. The groove for installation of the induction loop into the conveyor belt is cut with a suitable knife in the bottom part of the conveyor belt, wherein the groove is shaped as a rectangle with rounded edges, wherein it runs almost along the entire width of the belt, and wherein in the preferred embodiment the groove has a depth of 4.5 mm and width of 9 mm. Said groove is preferably located below the carrier steel braids arranged along the whole belt. The induction loop is installed in the groove, followed by vulcanization of the groove with the installed loop using a two-component repair rubber for belts. Once the two-component rubber is dried, it is smoothed out and aligned with the surface of the belt.

The sensor device for sensing damage of the conveyor belt according to the invention will be described in further detail based on an exemplary embodiment and figures, which show:
- Figure 1: A schematic view of an infinite conveyor belt
- Figure 2: Upper part of the conveyor belt
- Figure 3: Ground plan of the conveyor belt
- Figure 4: Cross-section A - A of the conveyor belt
- Figure 5: detail A from figure 4

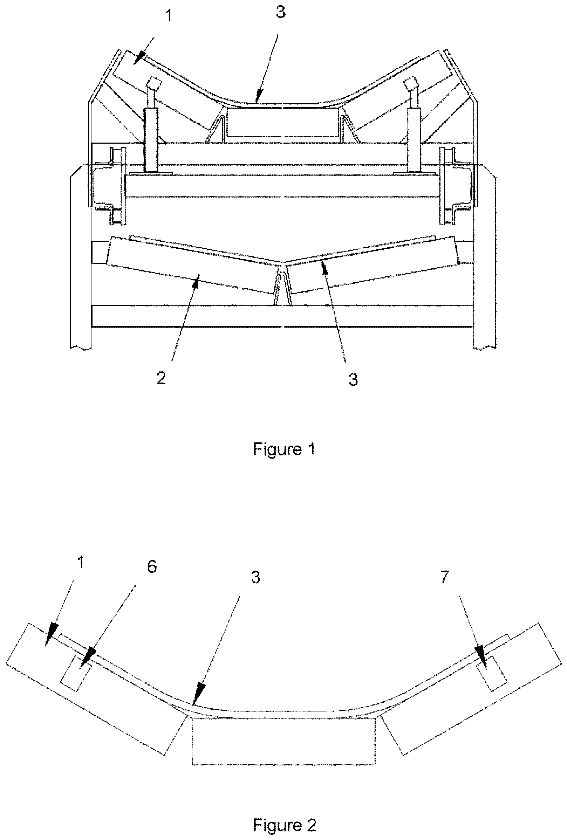

Figure 1 schematically shows an infinite conveyor belt, wherein on a carrier frame all needed drive parts and control electronics for turning the drive on and off are provided. On the upper cylinders 1 the conveyor belt 3 is installed, wherein its linear movement is enabled with lower cylinders 2. The device according to the invention preferably comprises an outer induction loop 4 and an inner induction loop 5 integrated in the bottom part of the conveyor belt 3, as well as a transmitter 6 and a receiver 7 of the control unit. In parallel to the outer induction loop 4 the conveyor belt is below the first cylinder 1 provided with the transmitter 6 and below the third valve 1 with the receiver 7. The transmitter 6 and the receiver 7 are a part of a classical control electronics which is arranged to compare parameters of the transmitter and receiver 6, 7 with the parameters of the induction loops 4 and 5. An advantage of two induction loops is in that the receiver can detect two different levels of received signals, which cause two different responses of the monitoring unit. If one of the loops is torn due to material wear, the signal sensed by the receiver is smaller and the monitoring unit warns the user about the pending replacement of induction loops. In case one is showing wear, the other is close to a similar state, thus replacement of both is preferred due to maintenance efficiency and operation reliability. In case both loops are torn, the receiver receives an even smaller signal, which signals a damaged conveyor belt and the monitoring unit generates a signal for the control unit to stop the drive of the conveyor belt.
- at least one external induction loop and at least one inner induction loop, both forming a pair of induction loops, wherein said loops are installed in grooves provided in a bottom part of the conveyor belt below the carrier steel braids, wherein the outer diameter of both induction loops is equal or smaller than 4 mm, and wherein the device comprises at least one pair of induction loops,
- a transmitter comprising a coil for generating electromagnetic field of sending an electromagnetic signal to the induction loop, thus forming an electromagnetic field of the loop,
- a receiver arranged for sensing the electromagnetic field of the loop, and
- a control unit for controlling operation of the device and/or the conveyor belt and a monitoring unit, which is arranged to notify a user that replacement is needed or that the conveyor belt is damaged in case lower power of the signal received by the receiver is sensed, wherein the control unit is also arranged to terminate the drive of the conveyor belt.

The induction loops installed in the belt does not reduce its rigidity and carrying capacity.

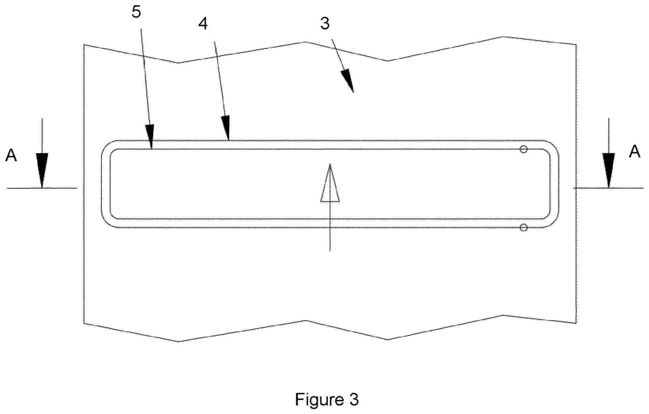

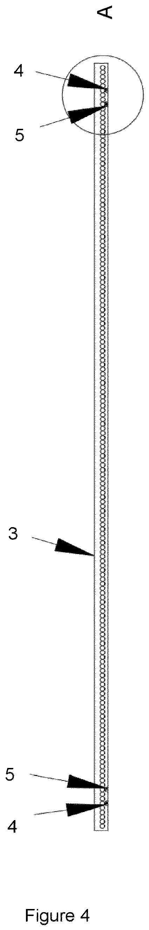

The device for sensing conveyor belt damage preferably comprises two induction loops installed in grooves made in the bottom part of the conveyor belt (see figures 3, 4 and 5). The outer induction loop is shaped as a rectangle, which due to its width takes up almost the whole width of the conveyor belt. The inner induction loop is installed inside the outer loop and is also rectangular in shape. The corners of the rectangular shaped loops are rounded, so there are no sharp corners. The induction loop is made from a copper braid installed in a spring pipe from stainless steel resistant to acid, which is further installed in an insulation tube. The ends of the copper braid are with a connecting clamp mechanically connected into a loop. Ends of the spring pipe and the ends of the insulation pipe are bonded together. The bonds of the copper braid, spring pipe and insulation pipe are installed in a thermally shrinking pipe having a length of 50 mm or similar to cover the bonded part.

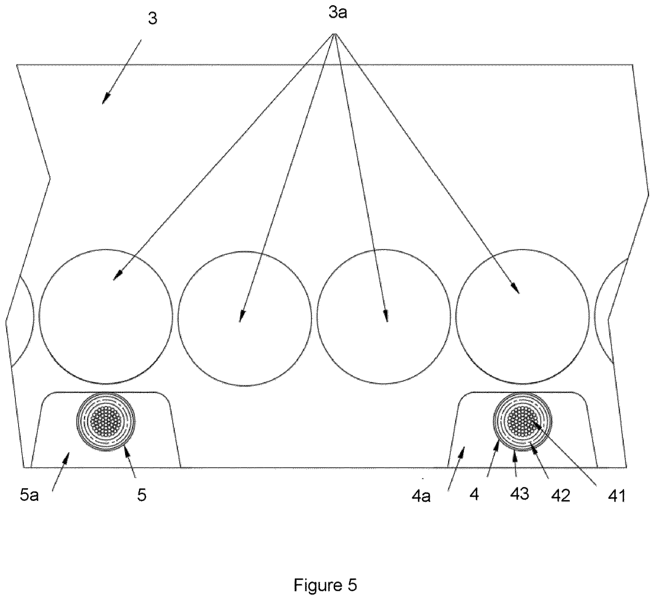

The groove for installation of the external induction coil 4 into the conveyor belt 3 (see figure 5) is made by cutting with a knife, so that a groove 4a in the shape of a rectangle with rounded corners is cut in the bottom part of the conveyor belt along almost the entire width of the belt 3. The groove has a depth of 4.5 mm and a width of 9 mm, which is ensured by the shape of the knife. The inner induction loop 5 is installed in a groove which is 25 mm away from the outer groove 4a.

Above grooves 4a and 5a steel braids 3a are located, which are arranged along the whole conveyor belt and are above the upper part of the grooves 4a and 5a. After the grooves are cut, the induction loops are installed as described above. When the induction loops are installed, vulcanization of the groove with the installed loop is performed using a two-component repair rubber for belts. Once the two-component rubber is dried, it is smoothed out and aligned with the surface of the belt.

The length of the induction coils together with connecting clamps is from 2500 to 3500 mm. The outer diameter of induction coils is smaller than 4 mm.

One or two induction coils are installed along the conveyor belt at a distance from 5 m to 30 m. The number of pairs of induction coils is arbitrary, preferably more, at least from 2 to 500, depending on the length and configuration of the conveyor belt, as well as possible problematic parts of the conveyor belt. The number of induction coil pairs in the conveyor belt depends on the user, who can decide on the number of pairs based on experience with a particular conveyor.

The induction coil 5 has the same structure as the coil 4, which is made from a copper braid 41. The braid 41 is installed in a spring pipe 42 from stainless steel resistant to acid, which is further installed in an insulation tube 43. The ends of the copper braid 41 are with a connecting clamp mechanically connected into a loop. Ends of the spring pipe 42 and the ends of the insulation tube 43 are bonded together. The bonds of the copper braid, spring pipe and insulation pipe are installed in a thermally shrinking pipe having a length of 50 mm or similar to cover the bonded part. After a thermal treatment of the thermally shrinking pipe, the bond between the braid 41, spring pipe 42 and the insulation tube 43 is vacuum sealed.

The induction coils are installed on the bottom side of the conveyor belt and take up almost the whole width of the conveyor belt, wherein said coils are mounted at a distance from 5 m to 50 m. The transmitters and receivers are mounted on the top holder at each intake point just behind the support rollers.

The transmitter and receiver are placed opposite each other on both sides under the upper rollers of the conveyor belt. The coil in the transmitter generates an electromagnetic field at a relatively low frequency and sends an electromagnetic signal to the induction loop. Due to the electromagnetic signal a current is induced in the loop, thus creating the loop's electromagnetic field. The electromagnetic field of the loop is sensed by the receiving coil of the receiver every time the induction loop passes by. The receiver transmits the received signal to the control unit every time, and as long as the signal strength is adequate, the system continues to function smoothly. In case the received power of the signal is not adequate, i.e., if the induction loop is damaged or discontinued, the conveyor belt is immediately stopped, as the electronic unit generates a signal for warning and stopping the drive of the conveyor belt. This prevents further damage of the conveyor belt. An advantage of the device according to the invention is in that it comprises two induction loops integrated in the conveyor belt, which can be paired with any known combination of transmitters and receivers. The parameters of the transmitter and the receiver have to be adjusted to the physical properties of induction loops, so that the control electronics based on the signals from the receiver can trigger generation of signal about smaller errors in one of the induction loops or generation of signal for shutting down the control electronics in case the induction loops are damaged due to the damaged conveyor belt.

After making the grooves for installation of induction loops, the conveyor belt is minimally weakened, as the conveyor belt retains its original properties upon vulcanization with the two-component repair rubber and subsequent processing. This means that the belt has almost the original rigidity, elasticity and carrying capacity. The installation of induction loops in the conveyor belt according to the invention is relatively simple and fast. The long lifespan of the induction loop is enabled by the free movement of the copper brain in the protective spring pipe as well as by the insulation tube, which protects the copper braid against chemical influences. Consequently, the belt is not mechanically loaded as it is filled with rubber and thus resistant to mechanical and chemical damage.

The induction loops for the device can be installed in already made conveyor belts, however, it is possible to integrate both induction loops during the manufacturing process of the conveyor belt. Installation of the induction loops in the infinite conveyor belt during manufacturing would decrease the manufacturing costs.

The device according to the invention enables fast and reliable detection of conveyor belt damage, which consequently leads to smaller damage, less standstills of the belt and smaller repair costs.

## Claims

1. A device for detection of an infinite conveyor belt damage, **characterized in that** the device comprises:
- at least one pair of induction loops comprising an external induction loop (4) and at least one inner induction loop (5), wherein said loops are configured for installation in a bottom part of the conveyor belt (3),
- a transmitter (6) comprising a coil for generating electromagnetic field of sending an electromagnetic signal to the induction loop (4, 5), thus forming an electromagnetic field of the loop (4, 5),
- a receiver (7) arranged for sensing the electromagnetic field of the loop (4,5), once it is located near the receiver, and
- a control unit for controlling operation of the device and/or the conveyor belt and a monitoring unit, which is arranged to sense lower power of the signal received by the receiver (7) that indicates conveyor belt damage.

2. The device according to claim 1, wherein the control unit is configured to stop the conveyor belt drive upon sensed deviation of received signal power by the receiver (7).

3. The device according to claim 1 or claim 2, wherein the outer and the inner induction coil are made from a cooper braid installed in a spring pipe from stainless steel resistant to acid, and further into an insulation tube; that the ends of the copper braid are connected into a loop with a connection clamp, wherein the ends of the spring pipe and the insulation tube are also bonded together into a loop; that the bonds of the copper braid, the spring pipe and the insulation tube are inserted in a thermally shrinking tube having a length sufficient to cover the bond.

4. The device according to claim 3, wherein the outer induction loop is shaped as a rectangle which takes up almost entire width of the conveyor belt, and that the inner induction loop is installed inside the outer loop and has a rectangular shape, wherein the corners of the rectangles are rounded.

5. The device according to any of the preceding claims, wherein the length of the induction coil together with connecting clamps is from 2500 to 3500 mm and that the outer diameter of the induction coil is smaller than 4 mm.

6. The device according to any of the preceding claims, wherein induction coils are installed along the conveyor belt at a distance from each other ranging from 5 m to 30 m.

7. The device according to any of the preceding claims, wherein the number of induction coil pairs is from 2 to 500.

8. The device according to any of the preceding claims, wherein the external and the inner induction coil are integrated in the conveyor belt during its manufacturing process.

9. The device according to any of the preceding claims, wherein the transmitter and the receiver are installed one opposite another on sides of the conveyor belt.

10. The device according to any of the preceding claims, **characterized in that** a tear in at least one loop of the pair (4, 5) causes a reduction of the signal received by the receiver (7), while a tear of both loops in the pair (4,5) generates an even smaller signal, wherein the control unit is in this case arranged to terminate the drive of the conveyor belt.

11. An infinite conveyor belt with the device according to any of the preceding claims.

12. The infinite conveyor belt according to claim 11, wherein at least one pair of induction coils is provided.

13. The infinite conveyor belt according to claim 11, wherein it comprises from 5 to 1000 pairs of induction coils.

14. A process of manufacturing a conveyor belt with the device according to any of the preceding claims, **characterized in that** the groove (4a) for installation of the induction loop (4) into the conveyor belt is cut with a suitable knife in the bottom part of the conveyor belt, wherein the groove (4a) is shaped as a rectangle with rounded corners, wherein it runs almost along the entire width of the belt, and the groove has a depth of 4.5 mm and width of 9 mm; wherein said groove (4a) is preferably located below the carrier steel braids (3a) arranged along the whole belt (3); and **in that** the induction loop (4) is installed in the groove (4a), followed by vulcanization of the groove with the installed loop using a two-component repair rubber for belts, wherein the repair rubber is dried, smoothed out and aligned with the surface of the belt (3).

15. The process of manufacturing a conveyor belt with the device according to any claim from 1 to 8, **characterized in that** after installation of the induction loops vulcanization of the groove with the installed loop is performed using a two-component repair rubber for belts; followed by drying the two-component rubber, which is then smoothed out and aligned with the surface of the belt.
